# EUROPÄISCHE PATENTSCHRIFT

(11) **EP 2 103 838 B1**
(45) Veröffentlichungstag und Bekanntmachung des Hinweises auf die Patenterteilung: **11.06.2014**
(21) Anmeldenummer: 09154686.1
(22) Anmeldetag: 10.03.2009
(51) Int. Cl.: F16F 15/12, F16F 15/131

(54) **Torsionsschwingungsdämpfer, insbesondere für den Antriebsstrang eines Fahrzeugs**
Torsional oscillation dampener, in particular for the power transmission of a vehicle
Amortisseur en torsion, en particulier pour la ligne de transmission d'un véhicule

(30) Priorität: 11.03.2008 DE 102008013576
(43) Veröffentlichungstag der Anmeldung: 23.09.2009
(73) Patentinhaber: ZF Friedrichshafen AG, 88038 Friedrichshafen (DE)
(72) Erfinder: Weth, Jürgen, 97464, Niederwerrn (DE)

(56) Entgegenhaltungen:
- DE-A1- 10 003 044
- GB-A- 2 178 824

## Beschreibung

Die vorliegende Erfindung betrifft einen Torsionsschwingungsdämpfer, wie er beispielsweise als Zweimassenschwungrad im Antriebsstrang eines Fahrzeugs angeordnet werden kann, um Drehungleichförmigkeiten im Drehmomentübertragungsweg zwischen einem Antriebsaggregat, beispielsweise einer Brennkraftmaschine, und folgenden Systembereichen eines Antriebsstrangs, also beispielsweise einer Kupplung oder eines Getriebes, zu dämpfen.

Ein solcher Torsionsschwingungsdämpfer ist beispielsweise in der DE 100 03 044 A1 behandelt. Dieser Torsionsschwingungsdämpfer ist für den Antriebsstrang eines Fahrzeugs vorgesehen, und umfasst eine mit einer Antriebswelle, also beispielsweise der Kurbelwelle einer Brennkraftmaschine, drehfest zu koppelnde Primärseite sowie eine gegen die Wirkung einer Dämpferelementenanordnung um eine Drehachse bezüglich der Primärseite drehbare Sekundärseite. Die Primärseite weist zwei in axialem Abstand zueinander liegende Deckscheibenelemente auf, während die Sekundärseite über ein zwischen die Deckscheibenelemente eingreifendes Zentralscheibenelement verfügt. Die Dämpferelemente der Dämpferelementenanordnung sind durch Dämpferfedern gebildet, die in Umfangsrichtung einerends an den Deckscheibenelementen und anderenends an dem Zentralscheibenelement zur Drehmomentübertragung abgestützt sind, und bei Kompression eine Relativdrehbewegung der Sekundärseite gegenüber der Primärseite ermöglichen. Der die Dämpferelemente enthaltende Raumbereich ist durch die beiden Deckscheibenelemente axial begrenzt, und mit einem viskosen Medium, wie z.B. Fett, gefüllt.

Das Zentralscheibenelement und damit die Sekundärseite ist bezüglich den Deckscheibenelementen und damit der Primärseite sowohl über eine in Radialrichtung als auch über eine in Achsrichtung wirksame Lagerungsanordnung abgestützt, wobei die Lagerungsanordnungen jeweils im Radialbereich von Naben der Primär- und Sekundärseite angeordnet sind. Ist die in Achsrichtung wirksame Lagerungsanordnung axial zwischen dem Zentralscheibenelement und einer abtriebsseitigen Abstützung an der Nabe der Primärseite angeordnet, ist die Sekundärseite gegen eine von außen eingebrachte Zugkraft gegenüber der Primärseite abgestützt, während bei Anordnung der Lagerungsanordnung axial zwischen dem Zentralscheibenelement und einer antriebsseitigen Abstützung an der Nabe der Primärseite die Sekundärseite gegen eine von außen eingebrachte Druckkraft gegenüber der Primärseite abgestützt ist. Ebenso können beidseits des Zentralscheibenelementes Lagerungsanordnungen vorgesehen sein, so dass das Zentralscheibenelement sowohl mit einer antriebsseitigen Abstützung als auch mit einer abtriebsseitigen Abstützung der Primärseite zusammen wirkt, und die Sekundärseite dadurch sowohl bei einer von außen eingebrachten Zugkraft als auch bei einer von außen eingebrachten Druckkraft gegenüber der Primärseite abgestützt ist.

Die Zug- oder Druckkraft wird mittels eines nicht gezeigten Ausrückers eingebracht, der auf eine an der Sekundärseite befestigte, ebenfalls nicht gezeigte Reibungskupplung zum Ein- oder Ausrücken dieser Reibungskupplung einwirkt.

Der bekannte Torsionsschwingungsdämpfer mag von Vorteil sein, wenn eine über übliche Toleranzen hinausgehende Relativbewegbarkeit der Sekundärseite gegenüber der Primärseite unerwünscht ist.

Ein Nachteil einer derartigen Anordnung liegt allerdings darin, dass auf Grund mangelnder axialer Flexibilität zwischen der Primärseite und der Sekundärseite Schwingungsanregungen entstehen oder übertragen werden können, die sich im Antriebsstrang spürbar machen. Auch können Fehlfunktionen bzw. Verformungen entstehen, die zum Ausfall oder zu einem übermäßigen Verschleiß führen können.

Aus der WO 2007/000131 A2 ist ein Kupplungssystem mit einem Torsionsschwingsdämpfer bekannt. Die beiden primärseitig angeordneten Deckscheibenelemente sind bezüglich des sekundärseitig angeordneten Zentralscheibenelements über im Schnitt im Wesentlichen L-förmige Lagerringe und zwischen diesen Lagerringen und dem Deckscheibenelement angeordnete ringartig ausgebildete Abstütz- bzw. Dichtelemente axial abgestützt. Durch diese Abstützung wird eine geringe Axialbewegbarkeit des Zentralscheibenelements, also der Sekundärseite, bezüglich der Deckscheibenelemente, also der Primärseite, ermöglicht. Diese Axialbewegbarkeit ist begrenzt dadurch, dass die axial angestellten Abstützelemente zwischen dem Zentralscheibenelement und einem jeweils zugeordneten Lagerring in axialer Richtung maximal komprimiert, also auf Block gesetzt werden.

Es ist die Aufgabe der vorliegenden Erfindung, einen Torsionsschwingungsdämpfer vorzusehen, welcher bei verbesserter Entkopplungsgüte zwischen Primärseite und Sekundärseite einer geringeren Überlastungsgefahr unterliegt.

Erfindungsgemäß wird diese Aufgabe gelöst durch einen Torsionsschwingungsdämpfer, insbesondere für den Antriebsstrang eines Fahrzeugs, umfassend eine Primärseite und eine gegen die Wirkung einer Dämpferelementenanordnung um eine Drehachse bezüglich der Primärseite drehbare Sekundärseite, wobei eine Seite von Primärseite und Sekundärseite zwei in axialem Abstand zueinander liegende Deckscheibenelemente aufweist und die andere Seite von Primärseite und Sekundärseite ein zwischen die Deckscheibenelemente eingreifendes Zentralscheibenelement aufweist und die Dämpferelemente der Dämpferelementenanordnung bezüglich der Deckscheibenelemente und des Zentralscheibenelements zur Drehmomentübertragung abgestützt sind, wobei das Zentralscheibenelement bezüglich jedem der Deckscheibenelemente über ein Abstützfederelement axial beweglich abgestützt ist und durch die Abstützfederelemente axial bezüglich der Deckscheibenelemente zentriert gehalten ist, wobei ferner wenigstens einem der Abstützfederelemente eine Überlastschutzanordnung zur Begrenzung der Relativaxialbewegung zwischen der Primärseite und der Sekundärseite unter Kompression dieses Abstützfederelements zugeordnet ist.

Bei dem erfindungsgemäß aufgebauten Torsionsschwingungsdämpfer ist einerseits durch die beiden Abstützfederelemente dafür gesorgt, dass im Bereich von deren Kompressibilität ein Axialbewegungsspiel zwischen Primärseite und Sekundärseite ermöglicht ist, so dass die Gefahr axialer Schwingungsübertragungen oder Anregungen deutlich vermindert ist. Gleichzeitig ist dadurch, dass zumindest einem Abstützfederelement eine Überlastschutzanordnung zugeordnet ist, welche die Axialbewegung zwischen der Primärseite und der Sekundärseite dann, wenn dieses Abstützfederelement komprimiert, also axial verstärkt belastet wird, dafür gesorgt, dass eine übermäßige Stauchung, die zu einer Beschädigung oder einem Umschnappen eines Abstützfederelements führen könnte, vermieden wird.

Insbesondere dann, wenn der Torsionsschwingungsdämpfer nasslaufend ausgebildet ist, ist es vorteilhaft, wenn die Abstützfederelemente ringartig ausgebildet sind und einen von den Deckscheibenelementen begrenzten und die Dämpferelementenanordnung enthaltenden Raumbereich beidseits des Zentralscheibenelements abschließen. Somit übernehmen die Abstützfederelemente nicht nur die Funktionalität der Zentrierung zwischen Primärseite und Sekundärseite, sondern erfüllen gleichzeitig auch eine Dichtungsfunktionalität, die einerseits den Austritt von in dem Raumbereich vorhandenem viskosen Medium verhindert, andererseits auch den Eintritt von Verunreinigungen in diesen Raumbereich ausschließt.

Die Abstützfederelemente können beispielsweise als Tellerfedern ausgebildet sein.

Bei einer besonders vorteilhaften Ausgestaltungsvariante wird vorgeschlagen, dass die in Zuordnung zu einem Abstützfederelement vorgesehene Überlastschutzanordnung ringartig ausgebildet ist und bezüglich des Zentralscheibenelements oder/und eines mit dem Abstützfederelement zusammenwirkenden Deckscheibenelements mit Axialbewegungsspiel angeordnet und axial abstützbar ist.

Um insbesondere im Bereich der Abstützung eines Abstützfederelements für definierte Reibverhältnisse bei Relativdrehung zwischen der Primärseite und der Sekundärseite sorgen zu können, wird vorgeschlagen, dass das Abstützfederelement bezüglich des Zentralscheibenelements oder des mit diesem zusammenwirkenden Deckscheibenelements über die Überlastschutzanordnung abgestützt ist.

Dabei kann weiter vorgesehen sein, dass die Überlastschutzanordnung einen vorzugsweise aus Kunststoffmaterial aufgebauten Überlastschutzring umfasst. Eine Überlastung eines derartigen Überlastschutzrings aus Kunststoffmaterial durch die Belastung, welche das Abtützelement ausübt, kann dadurch ausgeschlossen werden, dass das Abstützfederelement an dem Überlastschutzring über einen Druckring abgestützt ist, wobei der Druckring vorzugsweise aus Metallmaterial aufgebaut ist.

Bei einer weiteren vorteilhaften Ausgestaltungsvariante kann vorgesehen sein, dass der Überlastschutzring wenigstens im Abstützbereich bezüglich des Zentralscheibenelements oder/und des Deckscheibenelements flexibel ausgebildet ist. Diese flexible Ausgestaltung hat einerseits zur Folge, dass dann, wenn die Überlastschutzanordnung mit dem Zentralscheibenelement oder dem Deckscheibenelement in Kontakt tritt, dies nicht schlagartig erfolgt, sondern durch die Flexibilität eine Bewegungsdämpfung erfolgt. Weiterhin wird durch diese Flexibilität auch eine durch die Überlastschutzanordnung eingeführte Dichtfunktion dann, wenn diese Überlastschutzanordnung aktiv ist, verbessert. Dies macht sich insbesondere dann vorteilhaft bemerkbar, wenn der durch die Deckscheibenelemente begrenzte Raumbereich im Herstellungsvorgang mit viskosem Medium zu befüllen ist, welches dann nur erschwert über die Überlastschutzanordnung und auch das zugeordnete Abstützfederelement entweichen kann.

Um diese Befüllung in einfacher Weise zu ermöglichen, wird vorgeschlagen, dass radial außerhalb der Überlastschutzanordnung in dem Deckscheibenelement wenigstens eine Öffnung zum Befüllen des von den Deckscheibenelementen begrenzten Raumbereichs mit Fluid vorgesehen ist. Die wenigstens eine Öffnung kann im radialen Bereich des Abstützfederelements angeordnet sein.

Der ungewünschte Austritt von viskosem Medium beim Befüllvorgang nach radial innen kann dadurch noch weiter unterbunden werden, dass das Abstützfederelement bezüglich des Deckscheibenelements radial innerhalb der wenigstens einen Öffnung abgestützt ist, wobei dann vorzugsweise noch vorgesehen sein kann, dass die Überlastschutzanordnung bezüglich des Deckscheibenelements über das Abstützfederelement axial abstützbar ist.

Bei einer baulich sehr einfach zu realisierenden Ausgestaltungsform kann vorgesehen sein, dass die Überlastschutzanordnung mit dem zugeordneten Abstützfederelement einteilig ausgebildet ist.

Weiterhin wird vorgeschlagen, dass die Dämpferelementenanordnung in einem von den Deckscheibenelementen begrenzten Raumbereich mit einem Axialbewegungsspiel angeordnet ist, welches wenigstens dem durch die wenigstens einem Abstützfederelement zugeordnete Überlastschutzanordnung zugelassenen Axialbewegungsspiel zwischen der Primärseite und der Sekundärseite entspricht. Auf diese Art und Weise ist sichergestellt, dass die Relativaxialbewegbarkeit zwischen Primärseite und Sekundärseite durch die das Drehmoment zwischen diesen übertragende Dämpferelementenanordnung nicht in übermäßigem Ausmaß beeinträchtigt wird.

Um unter Beibehaltung einer gewissen Radialrelativverlagerbarkeit zwischen Primärseite und Sekundärseite gleichwohl auch eine definierte Radialrelativpositionierung sicherzustellen, wird weiter vorgeschlagen, dass die Überlastschutzanordnung bezüglich des Zentralscheibenelements oder/und des mit dem zugeordneten Abstützfederelement zusammenwirkenden Deckscheibenelements mit Radialbewegungsspiel angeordnet und radial abstützbar ist.

Hierzu kann beispielsweise vorgesehen sein, dass ein Element von Zentralscheibenelement und Deckscheibenelement einen die Überlastschutzanordnung radial zentrierenden Zentrierbereich aufweist und das andere Element von Zentralscheibenelement und Deckscheibenelement einen bei Relativradialbewegung zwischen der Primärseite und der Sekundärseite in Zentrieranlage an der Überlastschutzanordnung bringbaren Gegenzentrierbereich aufweist.

Um im Anlagebereich der Überlastschutzanordnung bezüglich des Zentralscheibenelements bzw. auch des zugeordneten Deckscheibenelements definierte Bewegungs- bzw. Reibverhältnisse vorsehen zu können, wird weiter vorgeschlagen, dass die Überlastschutzanordnung bezüglich einem Element von Zentralscheibenelement und Deckscheibelement drehfest gehalten ist.

Die Ankopplung eines erfindungsgemäß aufgebauten Torsionsschwingungsdämpfers an in einem Antriebsstrang folgende Systembereiche kann beispielsweise dadurch realisiert werden, dass an einer Seite von Primärseite und Sekundärseite eine Verzahnungsformation vorgesehen ist zur Kopplung mit einer Gegenverzahnungsformation an einer dem Drehmomentenfluss folgenden Komponente.

Derartige Verzahnungseingriffe sind, um diesen Eingriff überhaupt herstellen zu können, im Allgemeinen mit einem gewissen Umfangsbewegungsspiel behaftet. Dies kann insbesondere im Leerlaufzustand, also einem Zustand, in welchem keine oder nur geringe Drehmomente zu übertragen sind, zu Klappergeräuschen der gegeneinander anschlagenden Zahnflanken führen. Um dem entgegenzutreten, wird weiter vorgeschlagen, dass der Verzahnungsformation eine Umfangsvorspannanordnung zugeordnet ist, welche die Verzahnungsformation in Umfangsrichtung unter Vorspannung an der Gegenverzahnungsformation hält.

Die vorliegende Erfindung wird nachfolgend mit Bezug auf die beiliegenden Figuren detailliert beschrieben. Es zeigt:
- Fig. 1: eine Teil-Längsschnittansicht eines Torsionsschwingungsdämpfers;
- Fig. 2: das im Kreis II in Fig. 1 enthaltene Detail vergrößert;
- Fig. 3: eine Teil-Längsschnittansicht eines alternativ aufgebauten Torsionsschwingungsdämpfers;
- Fig. 4: das im Kreis IV in Fig. 3 enthaltene Detail vergrößert;
- Fig. 5: eine der Fig. 4 entsprechende Ansicht einer alternativen Ausgestaltungsform;
- Fig. 6: eine der Fig. 4 entsprechende Ansicht einer alternativen Ausgestaltungsform;
- Fig. 7: eine der Fig. 4 entsprechende Ansicht einer alternativen Ausgestaltungsform;
- Fig. 8: eine der Fig. 4 entsprechende Ansicht einer alternativen Ausgestaltungsform;
- Fig. 9: eine Teil-Längsschnittansicht eines alternativ aufgebauten Torsionsschwingungsdämpfers;
- Fig. 10: das im Kreis X in Fig. 9 enthaltene Detail vergrößert.

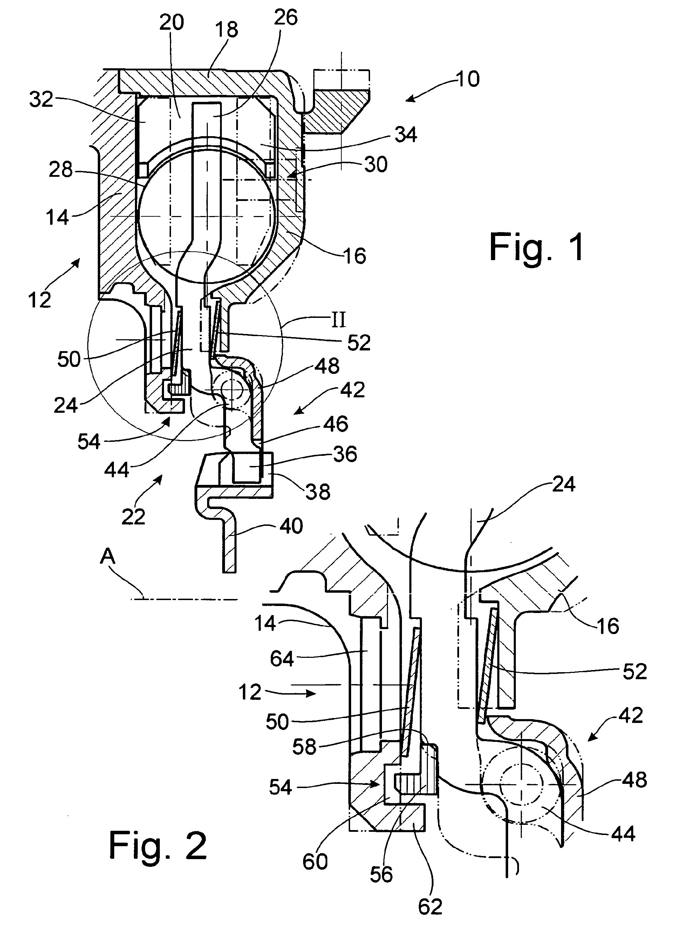

Die Fig. 1 und 2 zeigen eine erste Ausgestaltungsform eines Torsionsschwingungsdämpfers 10. Eine Primärseite 12 des Torsionsschwingungsdämpfers 10 umfasst zwei Deckscheibenelemente 14, 16. Das Deckscheibenelement 16 weist radial außen einen in Richtung einer Drehachse A sich erstreckenden, im Wesentlichen zylindrischen Ansatz 18 auf, mit welchem das Deckscheibenelement 14 in seinem radial äußeren Bereich beispielsweise durch Verschweißung fest verbunden ist, so dass von diesen Deckscheibenementen 14, 16 ein allgemein mit 20 bezeichneter Raumbereich begrenzt ist.

Die Primärseite 12 ist mit einer Antriebswelle, beispielsweise einer Kurbelwelle einer Brennkraftmaschine, drehfest zu verbinden, wobei dies beispielsweise auch über eine Elektromaschine eines Hybridantriebs erfolgen kann. Dabei kann dann die Primärseite 12 mit dem Rotor drehfest verbunden sein. Die diese Elektromaschine und den Torsionsschwingungsdämpfer 10 umfassende Baugruppe kann dann an der Antriebswelle vormontiert werden.

Eine Sekundärseite 22 umfasst ein in den Raumbereich 20, also zwischen die beiden Deckscheibelemente 14, 16 eingreifendes Zentralscheibenelement 24. Dieses wirkt in seinem radial äußeren Bereich mit Abstützabschnitten 26 mit den nur symbolisch dargestellten Dämpferelementen 28, z.B. Schraubendruckfedern, einer Dämpferelementenanordnung 30 zusammen. In entsprechender Weise sind an den Deckscheibenelementen 14, 16 entweder integral angeformt oder durch Vernietung oder dergleichen festgelegt Abstützabschnitte 32, 34 vorgesehen, an welchen sich die Dämpferelemente 28 zur Drehmomentübertragung zwischen der Primärseite 12 und der Sekundärseite 22 in Umfangsrichtung abstützen können.

Radial innen ist das Zentralscheibenelement 24 mit einer Verzahnungsformation 36 ausgebildet, die in Kämmeingriff steht mit einer Gegenverzahnungsformation 38 an einer im Drehmomentenfluss folgenden Baugruppe, beispielsweise dem Gehäuse 40 einer Doppelkupplung. Diese Doppelkupplung ist dann getriebeseitig festgelegt, so dass beim axialen Zusammenführen des Getriebes mit der Doppelkupplung einerseits und des Antriebsmotors mit dem Torsionsschwingungsdämpfer 10 andererseits der Kämmeingriff zwischen der Verzahnungsformation 36 und der Gegeverzahnungsformation 38 hergestellt werden kann.

Da derartige Kämmeingriffe im Allgemeinen mit einem zumindest geringen Umfangsbewegungsspiel ausgebildet sind, das insbesondere im Leerlaufzustand zu Klappergeräuschen der aneinander anschlagenden Zahnflanken führen kann, ist eine allgemein mit 42 bezeichnete Vorspannanordnung vorgesehen. Diese umfasst über den Umfang verteilt beispielsweise mehrere Vorspannfedern 44, die am Zentralscheibenelement 24 einerseits und einem ebenfalls mit einer Verzahnungsformation 46 ausgebildeten ringartigen Eingriffselement 48 andererseits in Umfangsrichtung abgestützt sind. Die beiden Verzahnungsformationen 36, 46, welche beide in die Gegenverzahnungsformation 38 eingreifen, sind also in Umfangsrichtung bezüglich einander vorgespannt, so dass Klappergeräusche insbesondere im Leerlaufzustand im Bereich dieser Kupplung nicht entstehen können. Durch diese Vorspannung ist jedoch die im Allgemeinen vorhandene Axialbewegbarkeit im Bereich dieser Kopplung eingeschränkt, da die Verzahnungsformationen 36, 46 unter Vorspannung und mithin erhöhter Reibung an der Gegenverzahnungsformation 38 abgestützt sind.

Man erkennt in den Fig. 1 und 2 deutlich, dass das Zentralscheibenelement 24, also im Wesentlichen auch die Sekundärseite 22, bezüglich der Deckscheibenelemente 14, 16, also im Wesentlichen der Primärseite 12, nicht durch eine starre Axial- bzw. Radiallagerung abgestützt ist. Vielmehr erkennt man in Fig. 2 zwei beispielsweise als Tellerfedern ausgebildete Abstützfederelemente 50, 52. Das in der Darstellung der Fig. 2 links, also motorseitig angeordnete Abstützfederelement 50 stützt sich mit seinem radial inneren Endbereich an dem Deckscheibenelement 14 ab. Mit seinem radial äußeren Endbereich ist es an der motorseitigen Oberfläche des Zentralscheibenelements 24 abgestützt. Das Abstützfederelement 52 stützt sich mit seinem radial inneren Bereich am Zentralscheibenelement 24 ab und stützt sich mit seinem radial äußeren Bereich am Deckscheibenelement 16.

Die beiden Abstützfederelemente 50, 52 sind einerseits unter Vorspannung eingebaut und andererseits hinsichtlich der durch diese bereitgestellten Federkräfte so aufeinander abgestimmt, dass das Zentralscheibenelement 24 bezüglich der Primärseite 12, d.h. der Deckscheibenelemente 14, 16, axial zentriert, also in definierter Positionierung ohne axialem und radialem Anlagekontakt gehalten ist. Somit ist im Ausmaß der Kompressibilität dieser Abstützfederelemente 50, 52 eine Axialrelativbewegbarkeit der Primärseite 12 bezüglich der Sekundärseite 22 möglich, was insbesondere dann von Vorteil ist, wenn im Bereich der Kopplung der Verzahnungsformationen 36, 46 mit der Gegenverzahnungsformation 38 ein Axialbewegungsspiel durch eine vergleichsweise starre bzw. reibungsbehaftete Kopplung nicht möglich ist. Hierzu ist es weiterhin von Vorteil, wenn die axiale Abmessung der Dämpferelemente 28 auf den entsprechenden axialen Anstand der Deckscheibenelemente 14, 16 in demjenigen Bereich, in welchem die Dämpferelemente 28 positioniert sind, so abgestimmt ist, dass auch hier eine Axialbewegung der Dämpferelemente 28 zwischen den Deckscheibenelementen 14, 16 zumindest in demjenigen Ausmaß, in welchem das Zentralscheibenelement 24 sich bezüglich der Primärseite 12 bewegen kann, ermöglicht ist. Somit können die Dämpferelemente 28 sich zusammen mit dem Zentralscheibenelement 24 axial bewegen, so dass ein zu einem Verschleiß führendes Einarbeiten dort, wo die Dämpferelemente 28 bzw. diese abstützende Federteller oder dergleichen an den Abstützabschnitten 26 des Zentralscheibenelements 24 abgestützt sind, vermieden wird.

Um insbesondere die Bewegung des Zentralscheibenelements 24 in Richtung auf das Deckscheibenelement 14, also auch auf einen Antriebsmotor zu, zu begrenzen und das Abstützfederelement 50 vor zu starker Kompression und mithin einer Überlastung zu schützen, ist diesem Abstützfederelement 50 eine Allgemein mit 54 bezeichnete Überlastschutzanordnung zugeordnet. Diese umfasst im dargestellten Ausgestaltungsbeispiel einen Überlastschutzring 56. Dieser ist mit L-förmigem Schnittprofil ausgebildet und liegt mit einem im Wesentlichen radial sich erstreckenden L-Schenkel nach radial außen an einem Zentrierbereich 58 des Zentralscheibenelements 24 an. Ein sich im Wesentlichen axial erstreckender L-Schenkel erstreckt sich in eine im radial inneren Bereich des Deckscheibenelements 14 gebildete ringartige Aussparung 60 hinein und endet im axial unbelasteten Zustand mit einem definierten Abstand in axialer Richtung vor dem Deckscheibenelement 14 bzw. in radialer Richtung vor einem Gegenzentrierbereich 62 am Deckscheibenelement 14.

Bewegt sich das Zentralscheibenelement 14 in axialer Richtung bezüglich der Primärseite 12 in Richtung auf einen Antriebsmotor zu, so kann diese Bewegung so lange andauern, bis der Überlastschutzring 56 axial am Deckscheibenelement 14 anstößt. In diesem Zustand ist vorzugsweise das Abstützfederelement 50 noch nicht vollständig komprimiert, also nicht vollständig plattgedrückt, so dass es vor Überlastung geschützt werden kann und insbesondere auch die Gefahr, dass es umschnappt und sich in der anderen Richtung verformt, vermieden wird. Gleichzeitig wird durch den Überlastschutzring 56 bei Ermöglichung einer Radialrelativbewegbarkeit zwischen der Primärseite und der Sekundärseite 22 durch das Zusammenwirken desselben mit dem Zentrierbereich 58 am Zentralscheibenelement 24 einerseits und dem Gegenzentrierbereich 62 am Deckscheibenelement 14 andererseits die maximal mögliche Radialrelativbewegung zwischen der Primärseite 12 und der Sekundärseite 22 auf ein zulässiges Ausmaß begrenzt.

Ein weiterer Aspekt des Vorsehens der Überlastschutzanordnung 54 mit dem Überlastschutzring 56 ist das Unterstützen eines fluiddichten Abschlusses im Angrenzungsbereich zwischen dem Deckscheibenelement 14 und dem Zentralscheibenelement 24. Man erkennt in den Fig. 1 und 2, dass im Deckscheibenelement 14 in demjenigen radialen Bereich, in welchem auch das Abstützfederelement 50 liegt, zumindest eine Öffnung 64 gebildet, durch welche hindurch viskoses Medium in den Raumbereich 20 eingefüllt werden kann. Dieses Einfüllen erfolgt auch auf Grund der geringen Fließfähigkeit des viskosen Mediums unter Druck, wobei die Gefahr besteht, dass durch die dabei entstehende Belastung des Abstützfederelements 50 dieses radial innen vom Deckscheibenelement 14 abhebt und somit eine Leckage des viskosen Mediums entsteht. Diese Leckage kann zur Folge haben, dass die tatsächlich in den Raumbereich 20 gelangende Menge des viskosen Mediums undefiniert ist, insbesondere nicht ausreichend viskoses Medium eingefüllt wird, um die gewünschte Schmierwirkung bzw. Viskositätsdämpfungswirkung erlangen zu können. Aus diesem Zweck kann bei dem in den Fig. 1 und 2 dargestellten Aufbau so vorgegangen werden, dass zum Befüllen des Raumbereichs 20 mit dem viskosen Medium zunächst das Deckscheibenelement 14 axial bezüglich des Zentralscheibenelements 24 so verschoben wird, dass der Überlastschutzring 56 mit seinem axial sich erstreckenden L-Schenkel in Anlage am Deckscheibenelement 14 kommt und durch die somit hergestellte Anpressung ein gegen den Austritt von viskosem Medium sicherer Abschluss erzielt wird. Die dann möglicherweise hinter dem Abstützfederelement 50 sich ansammelnde Menge des viskosen Mediums ist kalkulierbar und kann beim Befüllen berücksichtigt werden. Nach dem Einfüllen des viskosen Mediums wird selbstverständlich die bzw. jede der Öffnungen 64 durch einen Verschlusspropfen oder dergleichen fluiddicht abgeschlossen, so dass weder viskoses Medium austreten kann, noch Verunreinigungen eintreten können. Im Betrieb ist der Raumbereich 20 dann an beiden axialen Seiten des Zentralscheibenelements 24 durch die Abstützfederelemente 50, 52 gegen den Austritt von viskosem Medium einerseits und gegen den Eintritt von Verunreinigungen andererseits abgeschlossen.

Der Überlastschutzring 56 ist vorzugsweise aus Kunststoffmaterial hergestellt, das eine gewisse Elastizität bzw. Flexibilität aufweist. Auf diese Art und Weise wird es möglich, diesen am Zentralscheibenelement 24 leicht durch Presspassung in dem Zentrierbereich 58 zu halten, so dass auch im Betrieb der Überlastschutzring 56 seine definierte Positionierung am Zentralscheibenelement 24 beibehält. Die Flexibilität unterstützt weiterhin die Abschlusswirkung dann, wenn zum Befüllen des Raumbereichs 20 mit viskosem Medium der Überlastschutzring 56 gegen das Deckscheibenelement 14 gepresst ist. Weiterhin wird durch die Ausgestaltung mit flexiblem, also in gewissem Ausmaß nachgiebigem Material eine Anschlagdämpfung erhalten, wenn das Zentralscheibenelement 24 spontan axial in Richtung auf das Deckscheibenelement 14 zu bewegt wird.

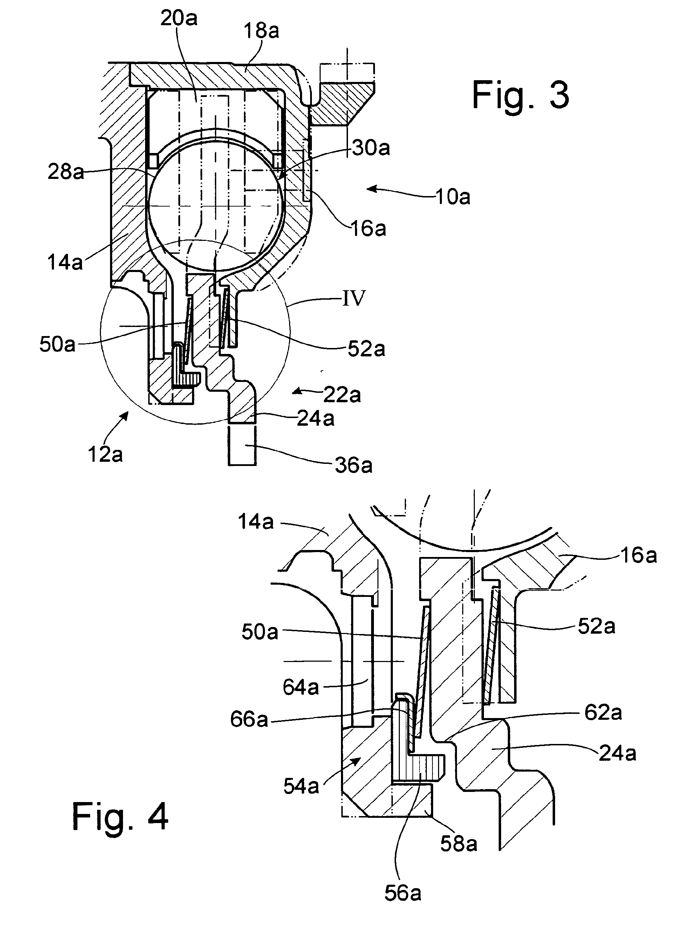

Eine abgewandelte Ausgestaltungsform eines Torsionsschwingungsdämpfers ist in den Fig. 3 und 4 gezeigt. Hier sind Komponenten, welche vorangehend beschriebenen Komponenten hinsichtlich Aufbau bzw. Funktion entsprechen, mit dem gleichen Bezugszeichen unter Hinzufügung des Anhangs "a" bezeichnet. Der Aufbau des Torsionsschwingungsdämpfers 10a entspricht grundsätzlich dem vorangehend Beschriebenen, insbesondere insofern, als die beiden Deckscheibenelemente 14a, 16a und das Zentralscheibenelement 24a betroffen sind. Es wird daher im Folgenden im Wesentlichen nur auf die zu der vorangehend beschriebenen Ausgestaltungsform bestehenden Änderungen eingegangen.

Man erkennt insbesondere in Fig. 4, dass das Abstützfederelement 50a, welchem eine Überlastschutzanordnung 54a zugeordnet ist, in seinem radial inneren Bereich bezüglich des Deckscheibenelements 14a über diese Überlastschutzanordnung 54a axial abgestützt ist. Hier besteht also ein radialer Überlapp zwischen dem nach radial außen sich erstreckenden L-Schenkel des Überlastschutzrings 56a und dem Abstützfederelement 50a. Radial innen ist der Überlastschutzring 56a an einem nunmehr am Deckscheibenelement 14a vorgesehenen Zentrierbereich 58a radial zentriert. Der Gegenzentrierbereich 62a ist nunmehr durch eine axiale Abstufung des Zentralscheibenelements 24a bereitgestellt.

Die Überlastschutzanordnung 54a umfasst in dem in den Fig. 3 und 4 gezeigten Ausgestaltungsbeispiel einen Druckring 66a, welcher den nach radial außen sich erstreckenden L-Schenkel des Überlastschutzrings 56a überdeckt und radial außen axial übergreift. Während auch hier der Überlastschutzring 56 aus vorzugsweise flexiblem Kunststoffmaterial aufgebaut ist, ist der Druckring 66a aus Metallmaterial aufgebaut. Neben der Tatsache, dass dadurch eine übermäßige Belastung und Abnutzung des Überlastschutzrings 56a durch direkten Kontakt mit dem Abstützfederelement 50a vermieden wird, ergibt sich dadurch eine hinsichtlich der Reibwerte besonders vorteilhafte Variante. Durch die Auswahl des Aufbaumaterials des Überlastschutzrings 56a wird des möglich, im Kontaktbereich desselben zum Deckscheibenelement 14a besonders günstige Reibverhältnisse vorzusehen, so dass bei Relativdrehung zwischen der Primärseite 12a und der Sekundärseite 22a primär der Überlastschutzring 56a sich gleitreibend entlang des radial inneren Bereich des Deckscheibenelements 14a bewegen wird, während dort, wo Metalloberflächen aneinander anliegen, keine Gleitreibung auftreten wird. Hier könnte beispielsweise auch vorgesehen sein, dass das Abstützfederelement 50a mit dem Druckring 66a drehfest verkoppelt ist. Ebenso kann eine drehfeste Verbindung zwischen dem Überlastschutzring 56a und dem Druckring 66a vorgesehen sein.

Für das Aufbaumaterial des Überlastschutzrings 56a können insbesondere auch faserverstärkte Kunststoffe eingesetzt werden, die einerseits hinsichtlich der Reibwerte optimiert sind, andererseits jedoch auch eine hervorragende Haltbarkeit aufweisen.

Ebenso wie bei der vorangehend beschriebenen Ausgestaltungsform erfüllt die Überlastschutzanordnung 54a hier auch die Funktionalität des Erzeugens eines dichten Abschlusses zwischen dem Deckscheibenelement 14a und dem Zentralscheibenelement 24a zum Befüllen des Raumbereichs 20a.

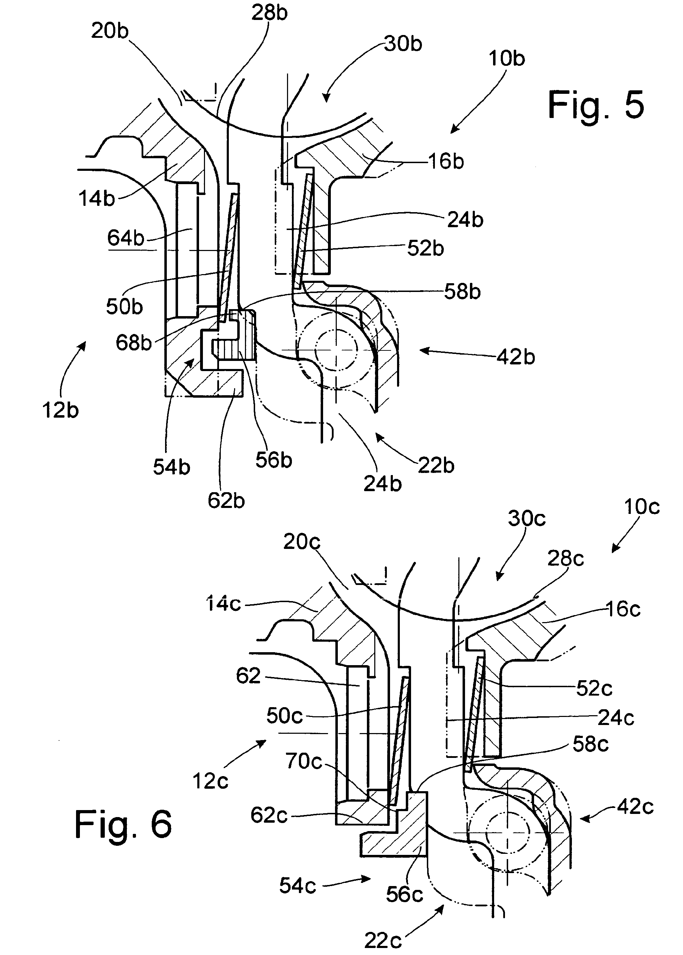

Eine weitere Ausgestaltungsform eines Torsionsschwingungsdämpfers ist in Fig. 5 gezeigt. Hier sind Komponenten, welche vorangehend beschriebenen Komponenten hinsichtlich Aufbau bzw. Funktion entsprechen, mit dem gleichen Bezugszeichen unter Hinzufügung des Anhangs "b" bezeichnet. Auch hier wird im Folgenden lediglich auf die vorangehend beschriebenen Ausgestaltungsformen bestehenden Unterschiede eingegangen.

Die in Fig. 5 gezeigte Ausgestaltungsvariante entspricht weitestgehend der vorangehend mit Bezug auf die Fig. 1 bereits beschriebenen Ausgestaltungsform. Man erkennt jedoch, dass der Überlastschutzring 56b in seinem radial äußeren, mit dem Abstützfederelement 50b sich radial überlappenden Abschnitt einen axialen Ansatz 68b aufweist. Bei axialer Bewegung des Zentralscheibenelements 24b auf das Deckscheibenelement 14b zu kommt zunächst dieser axiale Ansatz 68b in Kontakt mit dem radial inneren Bereich des Abstützfederelements 50b, um somit die Sekundärseite 22b axial bezüglich der Primärseite 12b abzustützen. Gleichzeitig presst dabei der Überlastschutzring 56b das Abstützfederelement 50b mit seinem radial inneren Bereich gegen das Deckscheibenelement 14b, so dass auch beim Befüllen des Raumbereichs 20b mit viskosem Medium die Gefahr des Abhebens des Abstützfederelements 50b vermieden wird. Zu diesem Zweck ist es auch vorteilhaft, wenn der Überlastschutzring 56b zumindest im Bereich des axialen Ansatzes 68b elastisch ausgeführt ist, um beispielsweise eine weitere Kompression des Überlastschutzrings 56b zuzulassen, so dass er auch mit seinem radial inneren und axial sich erstreckenden L-Schenkel bei weiterer Belastung in Anlage am Deckscheibenelement 14b gelangen kann und dieser radial innere, axial sich erstreckende L-Schenkel nicht nur die Funktionalität der Radialzentrierung in Zusammenwirkung mit dem Gegenzentrierbereich 62b erfüllt.

Bei der in Fig. 6 dargestellten Ausgestaltungsform sind Bauteile, welche vorangehend beschriebenen Bauteilen hinsichtlich Funktion bzw. Aufbau entsprechen, mit dem gleichen Bezugszeichen unter Hinzufügung eines Anhangs "c" bezeichnet.

Bei dieser Ausgestaltungsform ist der grundsätzlich wieder mit L-förmigem Schnittprofil ausgebildete Überlastschutzring 56c im Angrenzungsbereich der beiden L-Schenkel mit einem Bund 70c versehen, welcher dem radial inneren Endbereich des Deckscheibenelements 14c mit axialem Abstand gegenüber liegt. Der axial sich erstreckende L-Schenkel übergreift das Deckscheibenelement 14c radial innen in axialer Richtung und liegt dem daran vorgesehenen Gegenzentrierbereich 62c mit radialem Abstand gegenüber. Auf diese Art und Weise ist sowohl für die Axialrelativbewegung als auch für die Radialrelativbewegung wieder ein definiertes Ausmaß vorgegeben.

Ein wesentlicher Vorteil dieser Ausgestaltungsform ist die einfachere Herstellbarkeit, da am Deckscheibenelement 14c keinerlei Umfangsnuten oder dergleichen vorgesehen werden müssen.

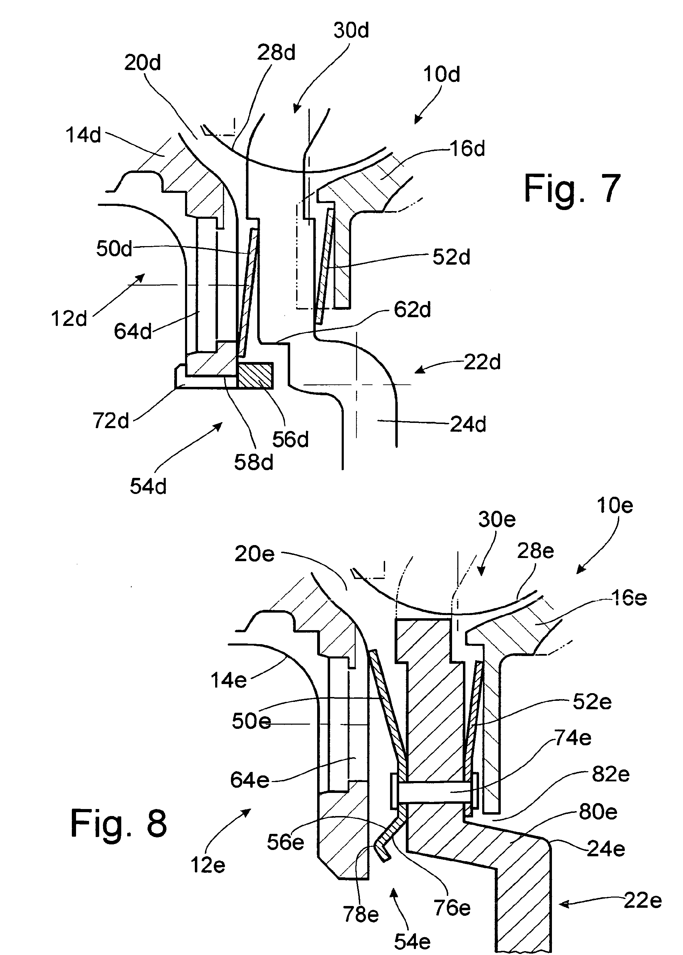

Bei der in Fig. 7 dargestellten Ausgestaltungsform eines Torsionsschwingungsdämpfers sind Bauteile, welche vorangehend beschriebenen Bauteilen hinsichtlich Aufbau bzw. Funktion entsprechen, mit dem gleichen Bezugszeichen unter Hinzufügung eines Anhangs "d" bezeichnet.

Der Überlastschutzring 56d weist hier über den Umfang verteilt vorzugsweise mehrere Rastarme 72d auf, welche den radial inneren Endbereich des Deckscheibenelements 14d axial übergreifen und an seiner vom Überlastschutzring 56d abgewandten Seite radial übergreifen. Somit ist der Überlastschutzring 56d am Deckscheibenelement 14d bzw. dem radial innen dort gebildeten Zentrierbereich 58d axial fest und radial zentriert gehalten. Er liegt dem Zentralscheibenelement 24d sowohl in radialer Richtung als auch in axialer Richtung mit geringem Abstand gegenüber, so dass auch hier Radial- und Axialbewegungen in definiertem Ausmaß zugelassen sind, zum Befüllen des Raumbereichs 20d jedoch ein dichter Abschluss nach innen hin durch die Anlage des Überlastschutzrings 56d am Zentralscheibenelement 24d erreicht werden kann. Der Überlastschutzring 56d ist hier durch die Rastarme 72d definiert und gegen Verkanten gesichert am Deckscheibenelement 14d gehalten.

In Fig. 8 ist eine Ausgestaltungsform gezeigt, bei welcher Bauteile, welche vorangehend beschriebenen Komponenten hinsichtlich Aufbau bzw. Funktion entsprechen, mit dem gleichen Bezugszeichen unter Hinzufügung des Anhangs "e" bezeichnet sind.

Bei dieser Ausgestaltungsform sind die beiden Abstützfederelemete 50e, 52e zueinander gegenläufig geschirmt ausgebildet und mit ihrem radial inneren Bereich durch eine Mehrzahl von Nietbolzen 74e oder dergleichen am Zentralscheibenelement 24e festgelegt. Sie erstrecken sich von dort nach radial außen und axial auf die jeweiligen Deckscheibenelemente 14e, 16e zu. Man erkennt, dass dadurch in Zuordnung zum Abstützfederelement 50e die Öffnungen 64e radial innerhalb von dessen Anlagekontakt am Deckscheibenelement 14e positioniert sind.

Die Überlastschutzanordnung 54e ist hier mit dem Abstützfederelement 50e integral ausgebildet. Radial innerhalb der Nietverbindung mit dem Zentralscheibenelement 24e weist das Abstützfederelement 50e einen den Überlastschutzring 56e bereitstellenden axial abgebogenen und nach radial innen sich erstreckenden Abschnitt 76e auf, der mit einem Kröpfungsbereich 78e dem Deckscheibenelement 14e mit geringem axialen Abstand gegenüber liegt. Bewegt sich das Zentralscheibenelement 24e unter Kompression des Abstützfederelements 50e auf das Deckscheibenelement 14e zu, so kommt nach Durchlaufen des zugelassenen Bewegungsspiels der Kröpfungsbereich 78e in Anlage am Deckscheibenelement 14e und verhindert somit im Wesentlichen eine weitere Axialrelativbewegung. Gleichzeitig wird dabei nach radial innen hin wieder ein fluiddichter Abschluss erzeugt. Obgleich der Abschnitt 76e auch mit einer gewissen axialelastischen Eigenschaft ausgebildet sein kann, ist durch die Formgebung dafür gesorgt, dass dieser weniger leicht verformbar ist, als das Abstützfederelement 50e. Dies bedeutet, dass beim Befüllen des Raumbereichs 20e mit viskosem Medium dieses durch die Öffnung 64e unter Druck eingepresst werden kann. Dabei hebt das Abstützfederelement 50e vom Deckscheibenelement 14e ab, während der Kröpfungsbereich 78e immer noch in Anlage am Deckscheibenelement 14e verbleibt. Das viskose Medium strömt somit in zuverlässiger Weise in Richtung zum Raumbereich 20e nach radial außen. Das Einbringen eines Abschlusselements in die Öffnung 64e ist dabei nicht erforderlich, da nach dem Befüllen des Raumbereichs 20e dieser durch das Abstützfederelement 50e dicht abgeschlossen ist.

Bei der in Fig. 8 gezeigten Ausgestaltungsform ist der zwischen der Primärseite und der Sekundärseite entstehende Reibkontakt im Wesentlichen auf die Anlage der Abstützfederelemente 50e, 52e in ihrem jeweiligen radial äußeren Endbereich am zugeordneten Deckscheibenelement 14e, 16e bestimmt. Um hier einen weiteren definierten Einfluss auf die Reibverhältnisse zu nehmen, könnten in diesen Bereichen an den im Allgemeinen ebenfalls aus Metallmaterial aufgebauten Deckscheibenelementen 14e, 16e Gleitringe, beispielsweise aus Kunststoffmaterial vorgesehen sein.

Um auch bei dieser Ausgestaltungsform eine übermäßige Relativradialbewegung zwischen der Primärseite 12e und der Sekundärseite 22e zu vermeiden, ist zwischen dem radial inneren Endbereich des Deckscheibenelements 12e und einem axial abgekröpften Bereich 80e des Zentralscheibenelements 24e ein Spalt 82e belassen. Dieser definiert das Ausmaß der zulässigen Relativradialbewegung. Selbstverständlich könnte beispielsweise am Deckscheibenelement 14e ein den Kröpfungsbereich 78e axial übergreifender und zu diesem einen radialen Abstand aufweisender Ansatz vorgesehen sein, der dann in Zusammenwirkung mit dem Überlastschutzring 56e für eine radiale Bewegungsbegrenzung sorgt.

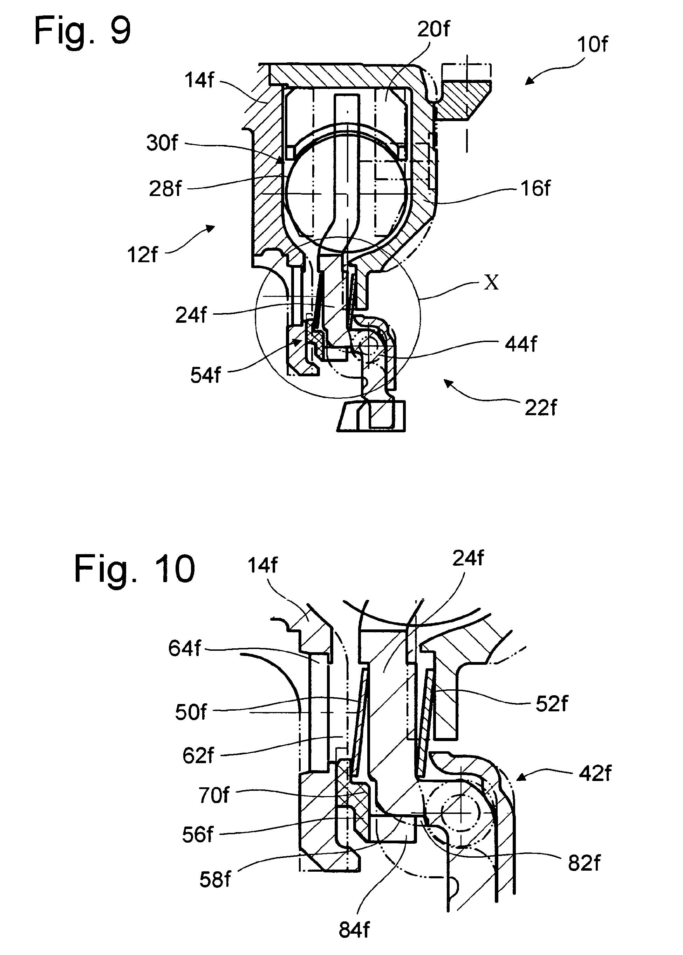

Eine weitere Ausgestaltungsform eines Torsionsschwingungsdämpfers ist in den Fig. 9 und 10 gezeigt. Bauteile, welche hinsichtlich Aufbau bzw. Funktion vorangehend beschriebenen Bauteilen entsprechen, sind mit dem gleichen Bezugszeichen unter Hinzufügung eines Anhangs "f" bezeichnet.

Bei der in Fig. 9 dargestellten Ausgestaltungsform eines Torsionsschwingungsdämpfers 10f ist der Überlastschutzring 56f wieder im Wesentlichen L-förmig mit zweifacher Abstufung gebildet, so dass sich ein axialer L-Schenkel wieder in Überdeckung mit dem Zentralscheibenelement 24f erstreckt und an dem Zentrierbereich 58f desselben von radial innen anliegt. In diesem Bereich weist das Zentralscheibenelement 24f axial offene Aussparungen 82f auf, in welchen entsprechende Vorsprünge bzw. den axialen L-Schenkel bildende Arme 84f des Überlastschutzrings 56f eingreifen. Durch die Abstimmung der Umfangserstreckung der Vorsprünge 84f auf die Aussparungen 82f kann eine drehfeste Ankopplung des Überlastschutzrings 56f an das Zentralscheibenelement 24f und mithin die Sekundärseite 22f bei gleichwohl erhaltener Relativaxialbewegbarkeit sichergestellt werden. Dies könnte auch bei den anderen Ausgestaltungsformen realisiert sein.

Der radial sich erstreckende L-Schenkel liegt auch unter der Vorspannwirkung des Abstützfederelements 50f am Deckscheibenelement 14f an. Bei Relativdrehung zwischen der Primärseite 12f und der Sekundärseite 22f wird aufgrund der vorangehend angesprochenen Drehkopplung des Überlastschutzrings 56f mit dem Zentralscheibenelement 24f eine Gleitbewegung in definierter Weise über zwischen dem Überlastschutzring 56f und dem Deckscheibenelement 14f auftreten.

Durch die zweifach gestufte Ausgestaltung des Überlastschutzrings 56f ist auch bei dieser Ausgestaltungsform am Übergangsbereich zwischen den beiden L-Schenkeln ein Bund 70f gebildet, der dem Deckscheibelement 24f grundsätzlich mit geringem Abstand axial gegenüberliegt und bei übermäßiger Relativbewegung, wie sie insbesondere auch zum Befüllen des Raumbereichs 20f mit viskosem Medium erzeugt wird, eine stabile und fluiddichte Anlage des Überlastschutzrings 56f auch am Zentralscheibenelement 24f zu gewährleisten.

In radialer Richtung liegt der axial sich erstreckende L-Schenkel bzw. liegen die Vorsprünge 84f am Zentrierbereich 58f des Deckscheibenelemetns 24f an. Der radial sich erstreckende L-Schenkel liegt in einer Umfangsaussparung des Deckscheibenelements 14f, die nach radial außen durch den Gegenzentrierbereich 62f begrenzt ist. Dieser liegt bei zentrierter Radialpositionierung zwischen Primärseite 12f und Sekundärseite 22f dem Überlastschutzring 56f mit Abstand radial außen gegenüber. Bei einer übermäßigen radialen Dezentrierung kommt der Überlastschutzring 56f auch in radiale Anlage am Gegenzentrierbereich 62f und verhindert somit eine weitere Relativradialverlagerung.

Der Überlastschutzring 56f ist vorzugsweise aus Kunststoffmaterial aufgebaut, welches insbesondere bezüglich des Deckscheibenelements 14f definierte, beispielsweise möglichst geringe Reibwerte aufweist. Da der Überlastschutzring 56f im Drehbetrieb keine Relativdrehung bezüglich des Deckscheibenelements 24f erfahren wird, wird es sich auch nicht bezüglich des Abstützfederelements 50f verdrehen, so dass der im Betrieb auftretende Verschleiß durch die einzig reibend wirksame Oberfläche, welche am Deckscheibenelement 14f anliegt, vergleichsweise gering ist. Die radiale Zentrierung von Primärseite 12f und Sekundärseite 22f erleichtert, ebenso wie bei den vorangehend bereits beschriebenen Ausgestaltungsformen, insbesondere den Montagevorgang der motorseitig angebrachten Komponente beim Einbau eines Getriebes mit einer getriebeseitigen Steckverzahnung.

Es sei darauf hingewiesen, dass selbstverständlich bei allen vorangehend beschriebenen Ausgestaltungsformen nicht nur in Zuordnung zu dem motorseitigen Abstützfederelement eine Überlastschutzanordnung vorgesehen sein kann. Alternativ oder zusätzlich kann selbstverständlich auch dem an der anderen axialen Seite des Zentralscheibenelements liegenden Abstützfederelement eine derartige Überlastschutzanordnung zugeordnet sein. Weiterhin sei betont, dass beispielsweise zur Erlangung einer besseren Dichtfunktionalität an dem Überlastschutzring dort, wo dieser in Kontakt mit einem jeweiligen Deckscheibenelement oder dem Zentralscheibenelement tritt, eine Dichtlippe ausgebildet sein kann, entweder an den Ring angeformt, oder mit diesem integral ausgebildet.

## Patentansprüche

1. Torsionsschwingungsdämpfer, insbesondere für den Antriebsstrang eines Fahrzeugs, umfassend eine Primärseite (12; 12a; 12b; 12c; 12d; 12e; 12f) und eine gegen die Wirkung einer Dämpferelementenanordnung (30; 30a; 30b; 30c; 30d; 30e; 30f) um eine Drehachse (A) bezüglich der Primärseite (12; 12a; 12b; 12c; 12d; 12e; 12f) drehbare Sekundärseite (22; 22a; 22b; 22c; 22d; 22e; 22f), wobei eine Seite von Primärseite (12; 12a; 12b; 12c; 12d; 12e; 12f) und Sekundärseite (22; 22a; 22b; 22c; 22d; 22e; 22f) zwei in axialem Abstand zueinander liegende Deckscheibenelemente (14, 16; 14a, 16a; 14b, 16b; 14c, 16c; 14d, 16d; 14e, 16e; 14f, 16f) aufweist und die andere Seite von Primärseite (12; 12a; 12b; 12c; 12d; 12e; 12f) und Sekundärseite (22; 22a; 22b; 22c; 22d; 22e; 22f) ein zwischen die Deckscheibenelemente (14, 16; 14a, 16a; 14b, 16b; 14c, 16c; 14d, 16d; 14e, 16e; 14f, 16f) eingreifendes Zentralscheibenelement (24; 24a; 24b; 24c; 24d; 24e; 24f) aufweist und die Dämpferelemente (28; 28a; 28b; 28c; 28d; 28e; 28f) der Dämpferelementenanordnung (30; 30a; 30b; 30c; 30d; 30e; 30f) bezüglich der Deckscheibenelemente (14, 16; 14a, 16a; 14b, 16b; 14c, 16c; 14d, 16d; 14e, 16e; 14f, 16f) und des Zentralscheibenelements (24; 24a; 24b; 24c; 24d; 24e; 24f) zur Drehmomentübertragung abgestützt sind, **dadurch gekennzeichnet, dass** das Zentralscheibenelement (24; 24a; 24b; 24c; 24d; 24e; 24f) bezüglich jedem der Deckscheibenelemente (14, 16; 14a, 16a; 14b, 16b; 14c, 16c; 14d, 16d; 14e, 16e; 14f, 16f) über ein Abstützfederelement (50, 52; 50a, 52a; 50b, 52b; 50c, 52c; 50d, 52d; 50e, 52e; 50f, 52f) axial beweglich abgestützt ist und durch die Abstützfederelemente (50, 52; 50a, 52a; 50b, 52b; 50c, 52c; 50d, 52d; 50e, 52e; 50f, 52f) axial bezüglich der Deckscheibenelemente (14, 16; 14a, 16a; 14b, 16b; 14c, 16c; 14d, 16d; 14e, 16e; 14, 16f) zentriert gehalten ist, wobei ferner wenigstens einem der Abstützfederelemente (50, 52; 50a, 52a; 50b, 52b; 50c, 52c; 50d, 52d; 50e, 52e; 50f, 52f) eine Überlastschutzanordnung (54; 54a; 54b; 54c; 54d; 54e; 54f) zur Begrenzung der Relativaxialbewegung zwischen der Primärseite (12; 12a; 12b; 12c; 12d; 12e; 12f) und der Sekundärseite (22; 22a; 22b; 22c; 22d; 22e; 22f) unter Kompression dieses Abstützfederelements (50, 52; 50a, 52a; 50b, 52b; 50c, 52c; 50d, 52d; 50e, 52e; 50f, 52f) zugeordnet ist.

2. Torsionsschwingungsdämpfer nach Anspruch 1,
**dadurch gekennzeichnet, dass** die Abstützfederelemente (50, 52; 50a, 52a; 50b, 52b; 50c, 52c; 50d, 52d; 50e, 52e; 50f, 52f) ringartig ausgebildet sind und einen von den Deckscheibenelementen (14, 16; 14a, 16a; 14b, 16b; 14c, 16c; 14d, 16d; 14e, 16e; 14f, 16f) begrenzten und die Dämpferelementenanordnung (30; 30a; 30b; 30c; 30d; 30e; 30f) enthaltenden Raumbereich (20; 20a; 20b; 20c; 20d; 20e; 20f) beidseits des Zentralscheibenelements (24; 24a; 24b; 24c; 24d; 24e; 24f) abschließen.

3. Torsionsschwingungsdämpfer nach Anspruch 2,
**dadurch gekennzeichnet, dass** die Abstützfederelemente (50, 52; 50a, 52a; 50b, 52b; 50c, 52c; 50d, 52d; 50e, 52e; 50f, 52f) als Tellerfedern ausgebildet sind.

4. Torsionsschwingungsdämpfer nach einem der Ansprüche 1 bis 3,
**dadurch gekennzeichnet, dass** die in Zuordnung zu einem Abstützfederelement (50; 50a; 50b; 50c; 50d; 50e; 50f) vorgesehene Überlastschutzanordnung (54; 54a; 54b; 54c; 54d; 54e; 54f) ringartig ausgebildet ist und bezüglich des Zentralscheibenelements (24; 24a; 24b; 24c; 24d; 24e; 24f) oder/und eines mit dem Abstützfederelement (50; 50a; 50b; 50c; 50d; 50e; 50f) zusammenwirkenden Deckscheibenelements (14; 14a; 14b; 14c; 14d; 14e; 14f) mit Axialbewegungsspiel angeordnet und axial abstützbar ist.

5. Torsionsschwingungsdämpfer nach Anspruch 4,
**dadurch gekennzeichnet, dass** das Abstützfederelement (50a; 50f) bezüglich des Zentralscheibenelements (24a; 24f) oder des mit diesem zusammenwirkenden Deckscheibenelements (14a; 14f) über die Überlastschutzanordnung (54a; 54f) abgestützt ist.

6. Torsionsschwingungsdämpfer nach Anspruch 4 oder 5,
**dadurch gekennzeichnet, dass** die Überlastschutzanordnung (54; 54a; 54b; 54c; 54d; 54e; 54f) einen vorzugsweise aus Kunststoffmaterial aufgebauten Überlastschutzring (56; 56a; 56b; 56c; 56d; 56e; 56f) umfasst.

7. Torsionsschwingungsdämpfer nach Anspruch 5 und Anspruch 6,
**dadurch gekennzeichnet, dass** das Abstützfederelement (50a) an dem Überlastschutzring (56a) über einen Druckring (66a) abgestützt ist.

8. Torsionsschwingungsdämpfer nach Anspruch 7,
**dadurch gekennzeichnet, dass** der Druckring (66a) aus Metallmaterial aufgebaut ist.

9. Torsionsschwingungsdämpfer nach einem der Ansprüche 6 bis 8,
**dadurch gekennzeichnet, dass** der Überlastschutzring (56; 56a; 56b; 56c; 56d; 56e; 56f) wenigstens im Abstützbereich bezüglich des Zentralscheibenelements (24; 24a; 24b; 24c; 24d; 24e; 24f) oder/und des Deckscheibenelements (14; 14a; 14b; 14c; 14d; 14e; 14f) flexibel ausgebildet ist.

10. Torsionsschwingungsdämpfer nach einem der Ansprüche 4 bis 9,
**dadurch gekennzeichnet, dass** radial außerhalb der Überlastschutzanordnung (54; 54a; 54b; 54c; 54d; 54e; 54f) in dem Deckscheibenelement (14; 14a; 14b; 14c; 14d; 14e; 14f) wenigstens eine Öffnung (64; 64a; 64b; 64c; 64d; 64e; 64f) zum Befüllen des von den Deckscheibenelementen (14, 16; 14a, 16a; 14b, 16b; 14c, 16c; 14d, 16d; 14e, 16e; 14f, 16f) begrenzten Raumbereichs (20; 20a; 20b; 20c; 20d; 20e; 20f) mit Fluid vorgesehen ist.

11. Torsionsschwingungsdämpfer nach Anspruch 10,
**dadurch gekennzeichnet, dass** die wenigstens eine Öffnung (64; 64a; 64b; 64c; 64d; 64e; 64f) im radialen Bereich des Abstützfederelements (50; 50a; 50b; 50c; 50d; 50e; 50f) angeordnet ist.

12. Torsionsschwingungsdämpfer nach Anspruch 10 oder 11,
**dadurch gekennzeichnet, dass** das Abstützfederelement (50; 50a; 50b; 50c; 50d; 50f) bezüglich des Deckscheibenelements (14; 14a; 14b; 14c; 14d; 14f) radial innerhalb der wenigstens einen Öffnung (64; 64a; 64b; 64c; 64d; 64f) abgestützt ist.

13. Torsionsschwingungsdämpfer nach Anspruch 12,
**dadurch gekennzeichnet, dass** die Überlastschutzanordnung (54b) bezüglich des Deckscheibenelements (14b) über das Abstützfederelement (50b) axial abstützbar ist.

14. Torsionsschwingungsdämpfer nach einem der Ansprüche 1 bis 13,
**dadurch gekennzeichnet, dass** die Überlastschutzanordnung (54e) mit dem zugeordneten Abstützfederelement (50e) einteilig ausgebildet ist.

15. Torsionsschwingungsdämpfer nach einem der Ansprüche 1 bis 14,
**dadurch gekennzeichnet, dass** die Dämpferelementenanordnung (30; 30a; 30b; 30c; 30d; 30e; 30f) in einem von den Deckscheibenelementen (14, 16; 14a, 16a; 14b, 16b; 14c, 16c; 14d, 16d; 14e, 16e; 14f, 16f) begrenzten Raumbereich (20a; 20b; 20c; 20d; 20e; 20f) mit einem Axialbewegungsspiel angeordnet ist, welches wenigstens dem durch die wenigstens einem Abstützfederelement (50, 52; 50a, 52a; 50b, 52b; 50c, 52c; 50d, 52d; 50e, 52e; 50f, 52f) zugeordnete Überlastschutzanordnung (54; 54a; 54b; 54c; 54d; 54e; 54f) zugelassenen Axialbewegungsspiel zwischen der Primärseite (12; 12a; 12b; 12c; 12d; 12e; 12f) und der Sekundärseite (22; 22a; 22b; 22c; 22d; 22e; 22f) entspricht.

16. Torsionsschwingungsdämpfer nach einem der Ansprüche 1 bis 15,
**dadurch gekennzeichnet, dass** die Überlastschutzanordnung (54; 54a; 54b; 54c; 54d; 54f) bezüglich des Zentralscheibenelements (24; 24a; 24b; 24c; 24d; 24f) oder/und des mit dem zugeordneten Abstützfederelement (50; 50a; 50b; 50c; 50d; 50f) zusammenwirkenden Deckscheibenelements (14; 14a; 14b; 14c; 14d; 14f) mit Radialbewegungsspiel angeordnet und radial abstützbar ist.

17. Torsionsschwingungsdämpfer nach Anspruch 16,
**dadurch gekennzeichnet, dass** ein Element von Zentralscheibenelement (24; 24a; 24b; 24c; 24d; 24f) und Deckscheibenelement (14; 14a; 14b; 14c; 14d; 14f) einen die Überlastschutzanordnung (54; 54a; 54b; 54c; 54d; 54f) radial zentrierenden Zentrierbereich (58; 58a; 58b; 58c; 58d; 58f) aufweist und das andere Element von Zentralscheibenelement (24; 24a; 24b; 24c; 24d; 24f) und Deckscheibenelement (14; 14a; 14b; 14c; 14d; 14f) einen bei Relativradialbewegung zwischen der Primärseite (12; 12a; 12b; 12c; 12d; 12f) und der Sekundärseite (22; 22a; 22b; 22c; 22d; 22f) in Zentrieranlage an der Überlastschutzanordnung (54; 54a; 54b; 54c; 54d; 54f) bringbaren Gegenzentrierbereich (62; 60a; 62b; 62c; 62d; 62f) aufweist.

18. Torsionsschwingungsdämpfer nach einem der Ansprüche 1 bis 17,
**dadurch gekennzeichnet, dass** die Überlastschutzanordnung (54f) bezüglich einem Element von Zentralscheibenelement (24f) und Deckscheibelement (14f) drehfest gehalten ist.

19. Torsionsschwingungsdämpfer nach einem der Ansprüche 1 bis 18,
**dadurch gekennzeichnet, dass** an einer Seite von Primärseite (12) und Sekundärseite (22) eine Verzahnungsformation (36) vorgesehen ist zur Kopplung mit einer Gegenverzahnungsformation (38) an einer dem Drehmomentenfluss folgenden Komponente.

20. Torsionsschwingungsdämpfer nach Anspruch 19,
**dadurch gekennzeichnet, dass** der Verzahnungsformation (36) eine Umfangsvorspannanordnung (42) zugeordnet ist, welche die Verzahnungsformation (36) in Umfangsrichtung unter Vorspannung an der Gegenverzahnungsformation (38) hält.

## Claims

1. Torsional vibration damper, in particular for the drivetrain of a vehicle, comprising a primary side (12; 12a; 12b; 12c; 12d; 12e; 12f) and a secondary side (22; 22a; 22b; 22c; 22d; 22e; 22f) that is rotatable relative to the primary side (12; 12a; 12b; 12c; 12d; 12e; 12f) about an axis of rotation (A) counter to the action of a damper element arrangement (30; 30a; 30b; 30c; 30d; 30e; 30f), wherein one side out of primary side (12; 12a; 12b; 12c; 12d; 12e; 12f) and secondary side (22; 22a; 22b; 22c; 22d; 22e; 22f) has two cover disc elements (14, 16; 14a, 16a; 14b, 16b; 14c, 16c; 14d, 16d; 14e, 16e; 14f, 16f) that have an axial spacing to one another, and the other side out of primary side (12; 12a; 12b; 12c; 12d; 12e; 12f) and secondary side (22; 22a; 22b; 22c; 22d; 22e; 22f) has a central disc element (24; 24a; 24b; 24c; 24d; 24e; 24f) that engages between the cover disc elements (14, 16; 14a, 16a; 14b, 16b; 14c, 16c; 14d, 16d; 14e, 16e; 14f, 16f), and the damper elements (28; 28a; 28b; 28c; 28d; 28e; 28f) of the damper element arrangement (30; 30a; 30b; 30c; 30d; 30e; 30f) are supported with respect to the cover disc elements (14, 16; 14a, 16a; 14b, 16b; 14c, 16c; 14d, 16d; 14e, 16e; 14f, 16f) and the central disc element (24; 24a; 24b; 24c; 24d; 24e; 24f) for the transmission of torque, **characterized in that** the central disc element (24; 24a; 24b;
24c; 24d; 24e; 24f) is supported, so as to be axially movable with respect to each of the cover disc elements (14, 16; 14a, 16a; 14b, 16b; 14c, 16c; 14d, 16d; 14e, 16e; 14f, 16f), by means of a supporting spring element (50, 52; 50a, 52a; 50b, 52b; 50c, 52c; 50d, 52d; 50e, 52e; 50f, 52f) and is held axially centred with respect to the cover disc elements (14, 16; 14a, 16a; 14b, 16b; 14c, 16c; 14d, 16d; 14e, 16e; 14f, 16f) by the supporting spring elements (50, 52; 50a, 52a; 50b, 52b; 50c, 52c; 50d, 52d; 50e, 52e; 50f, 52f), wherein furthermore, at least one of the supporting spring elements (50, 52; 50a, 52a; 50b, 52b; 50c, 52c; 50d, 52d; 50e, 52e; 50f, 52f) is assigned an overload protection arrangement (54; 54a; 54b; 54c; 54d; 54e; 54f) for limiting the relative axial movement between the primary side (12; 12a; 12b; 12c; 12d; 12e; 12f) and the secondary side (22; 22a; 22b; 22c; 22d; 22e; 22f) when said supporting spring element (50, 52; 50a, 52a; 50b, 52b; 50c, 52c; 50d, 52d; 50e, 52e; 50f, 52f) is under compression.

2. Torsional vibration damper according to Claim 1, **characterized in that** the supporting spring elements (50, 52; 50a, 52a; 50b, 52b; 50c, 52c; 50d, 52d; 50e, 52e; 50f, 52f) are of annular form and form terminations of a space region (20; 20a; 20b; 20c; 20d; 20e; 20f), which is delimited by the cover disc elements (14, 16; 14a, 16a; 14b, 16b; 14c, 16c; 14d, 16d; 14e, 16e; 14f, 16f) and contains the damper element arrangement (30; 30a; 30b; 30c; 30d; 30e; 30f), on both sides of the central disc element (24; 24a; 24b; 24c; 24d; 24e; 24f).

3. Torsional vibration damper according to Claim 2, **characterized in that** the supporting spring elements (50, 52; 50a, 52a; 50b, 52b; 50c, 52c; 50d, 52d; 50e, 52e; 50f, 52f) are in the form of plate springs.

4. Torsional vibration damper according to one of Claims 1 to 3,
**characterized in that** the overload protection arrangement (54; 54a; 54b; 54c; 54d; 54e; 54f) provided so as to be assigned to a supporting spring element (50; 50a; 50b; 50c; 50d; 50e; 50f) is of annular form and is arranged with axial movement play, and can be axially supported, with respect to the central disc element (24; 24a; 24b; 24c; 24d; 24e; 24f) and/or with respect to a cover disc element (14; 14a; 14b; 14c; 14d; 14e; 14f) that interacts with the supporting spring element (50; 50a; 50b; 50c; 50d; 50e; 50f).

5. Torsional vibration damper according to Claim 4,
**characterized in that** the supporting spring element (50a; 50f) is supported with respect to the central disc element (24a; 24f), or with respect to the cover disc element (14a; 14f) that interacts therewith, via the overload protection arrangement (54a; 54f).

6. Torsional vibration damper according to Claim 4 or 5,
**characterized in that** the overload protection arrangement (54; 54a; 54b; 54c; 54d; 54e; 54f) comprises an overload protection ring (56; 56a; 56b; 56c; 56d; 56e; 56f) composed preferably of plastics material.

7. Torsional vibration damper according to Claim 5 and Claim 6,
**characterized in that** the supporting spring element (50a) is supported on the overload protection ring (56a) via a thrust ring (66a).

8. Torsional vibration damper according to Claim 7,
**characterized in that** the thrust ring (66a) is composed of metal material.

9. Torsional vibration damper according to one of Claims 6 to 8,
**characterized in that** the overload protection ring (56; 56a; 56b; 56c; 56d; 56e; 56f) is of flexible form at least in the support region with respect to the central disc element (24; 24a; 24b; 24c; 24d; 24e; 24f) and/or with respect to the cover disc element (14; 14a; 14b; 14c; 14d; 14e; 14f).

10. Torsional vibration damper according to one of Claims 4 to 9,
**characterized in that** at least one opening (64; 64a; 64b; 64c; 64d; 64e; 64f) via which the space region (20; 20a; 20b; 20c; 20d; 20e; 20f) delimited by the cover disc elements (14, 16; 14a, 16a; 14b, 16b; 14c, 16c; 14d, 16d; 14e, 16e; 14f, 16f) can be filled with fluid is provided in the cover disc element (14; 14a; 14b; 14c; 14d; 14e; 14f) radially to the outside of the overload protection arrangement (54; 54a; 54b; 54c; 54d; 54e; 54f).

11. Torsional vibration damper according to Claim 10,
**characterized in that** the at least one opening (64; 64a; 64b; 64c; 64d; 64e; 64f) is arranged in the radial region of the supporting spring element (50; 50a; 50b; 50c; 50d; 50e; 50f).

12. Torsional vibration damper according to Claim 10 or 11,
**characterized in that** the supporting spring element (50; 50a; 50b; 50c; 50d; 50e; 50f) is supported with respect to the cover disc element (14; 14a; 14b; 14c; 14d; 14e; 14f) radially to the inside of the at least one opening (64; 64a; 64b; 64c; 64d; 64e; 64f).

13. Torsional vibration damper according to Claim 12,
**characterized in that** the overload protection arrangement (54b) can be axially supported with respect to the cover disc element (14b) via the supporting spring element (50b).

14. Torsional vibration damper according to one of Claims 1 to 13,
**characterized in that** the overload protection arrangement (54e) is formed in one piece with the assigned supporting spring element (50e).

15. Torsional vibration damper according to one of Claims 1 to 14, **characterized in that** the damper element arrangement (30; 30a; 30b; 30c; 30d; 30e; 30f) is arranged, in a space region (20; 20a; 20b; 20c; 20d; 20e; 20f) delimited by the cover disc elements (14, 16; 14a, 16a; 14b, 16b; 14c, 16c; 14d, 16d; 14e, 16e; 14f, 16f), with axial movement play corresponding at least to the axial movement play, permitted by the overload protection arrangement (54; 54a; 54b; 54c; 54d; 54e; 54f) assigned to at least one supporting spring element (50, 52; 50a, 52a; 50b, 52b; 50c, 52c; 50d, 52d; 50e, 52e; 50f, 52f), between the primary side (12; 12a; 12b; 12c; 12d; 12e; 12f) and the secondary side (22; 22a; 22b; 22c; 22d; 22e; 22f).

16. Torsional vibration damper according to one of Claims 1 to 15,
**characterized in that** the overload protection arrangement (54; 54a; 54b; 54c; 54d; 54f) is arranged with radial movement play, and can be radially supported, with respect to the central disc element (24; 24a; 24b; 24c; 24d; 24f) and/or with respect to the cover disc element (14; 14a; 14b; 14c; 14d; 14f) that interacts with the assigned supporting spring element (50; 50a; 50b; 50c; 50d; 50f).

17. Torsional vibration damper according to Claim 16,
**characterized in that** one element out of central disc element (24; 24a; 24b; 24c; 24d; 24f) and cover disc element (14; 14a; 14b; 14c; 14d; 14f) has a centring region (58; 58a; 58b; 58c; 58d; 58f) that radially centres the overload protection arrangement (54; 54a; 54b; 54c; 54d; 54f), and the other element out of central disc element (24; 24a; 24b; 24c; 24d; 24f) and cover disc element (14; 14a; 14b; 14c; 14d; 14f) has a counterpart centring region (62; 60a; 62b; 62c; 62d; 62f) that can be placed in centring abutment against the overload protection arrangement (54; 54a; 54b; 54c; 54d; 54f) during relative radial movement between the primary side (12; 12a; 12b; 12c; 12d; 12f) and the secondary side (22; 22a; 22b; 22c; 22d; 22f).

18. Torsional vibration damper according to one of Claims 1 to 17,
**characterized in that** the overload protection arrangement (54f) is held rotationally conjointly with respect to one element out of central disc element (24f) and cover disc element (14f).

19. Torsional vibration damper according to one of Claims 1 to 18,
**characterized in that**, on one side out of primary side (12) and secondary side (22), there is provided a toothing formation (36) for coupling to a counterpart toothing formation (38) on one of the components downstream in the torque flow.

20. Torsional vibration damper according to Claim 19,
**characterized in that** the toothing formation (36) is assigned a circumferential preload arrangement (42) which holds the toothing formation (36) against the counterpart toothing formation (38) under preload in the circumferential direction.

## Revendications

1. Amortisseur en torsion, notamment pour la ligne de transmission d'un véhicule, comprenant un côté principal (12 ; 12a ; 12b ; 12c ; 12d ; 12e ; 12f) et un côté secondaire (22 ; 22a ; 22b ; 22c ; 22d ; 22e ; 22f) pouvant tourner autour d'un axe de rotation (A) par rapport au côté principal (12 ; 12a ; 12b ; 12c ; 12d ; 12e ; 12f) contre l'effet d'un dispositif à élément amortisseur (30 ; 30a ; 30b ; 30c ; 30d ; 30e ; 30f), un côté du côté principal (12 ; 12a ; 12b ; 12c ; 12d ; 12e ; 12f) et du côté secondaire (22 ; 22a ; 22b ; 22c ; 22d ; 22e ; 22f) comportant deux éléments de vitre de recouvrement (14, 16 ; 14a, 16a ; 14b, 16b ; 14c, 16c ; 14d, 16d ; 14e, 16e ; 14f, 16f) reposant à une certaine distance axiale l'un de l'autre et l'autre côté du côté principal (12 ; 12a ; 12b ; 12c ; 12d ; 12e ; 12f) et du côté secondaire (22 ; 22a ; 22b ; 22c ; 22d ; 22e ; 22f) comportant un élément de vitre centrale (24 ; 24a ; 24b ; 24c ; 24d ; 24e ; 24f) s'engrenant entre les éléments de vitre de recouvrement (14, 16 ; 14a, 16a ; 14b, 16b ; 14c, 16c ; 14d, 16d ; 14e, 16e ; 14f, 16f) et les éléments amortisseurs (28 ; 28a ; 28b ; 28c ; 28d ; 28e ; 28f) du dispositif à élément amortisseur (30 ; 30a ; 30b ; 30c ; 30d ; 30e ; 30f) étant maintenus par rapport aux éléments de vitre de recouvrement (14, 16 ; 14a, 16a ; 14b, 16b ; 14c, 16c ; 14d, 16d ; 14e, 16e ; 14f, 16f) et à l'élément de vitre centrale (24 ; 24a ; 24b ; 24c ; 24d ; 24e ; 24f) pour réaliser la transmission de couple de rotation, **caractérisé en ce que** l'élément de vitre centrale (24 ; 24a ; 24b ; 24c ; 24d ; 24e ; 24f) est maintenu de façon mobile dans le plan axial par rapport à chacun des éléments de vitre de recouvrement (14, 16 ; 14a, 16a ; 14b, 16b ; 14c, 16c ; 14d, 16d ; 14e, 16e ; 14f, 16f) via un élément de ressort d'appui (50, 52 ; 50a, 52a ; 50b, 52b ; 50c, 52c ; 50d, 52d ; 50e, 52e ; 50f, 52f) et maintenu de façon centrée par les éléments de ressort d'appui (50, 52 ; 50a, 52a ; 50b, 52b ; 50c, 52c ; 50d, 52d ; 50e, 52e ; 50f, 52f) par rapport aux éléments de vitre de recouvrement (14, 16 ; 14a, 16a ; 14b, 16b ; 14c, 16c ; 14d, 16d ; 14e, 16e ; 14, 16f), un dispositif de protection contre les surcharges (54 ; 54a ; 54b ; 54c ; 54d ; 54e ; 54f) étant en outre associé à au moins un des éléments de ressort d'appui (50, 52 ; 50a, 52a ; 50b, 52b ; 50c, 52c ; 50d, 52d ; 50e, 52e ; 50f, 52f) en vue de limiter le mouvement axial relatif entre le côté principal (12 ; 12a ; 12b ; 12c ; 12d ; 12e ; 12f) et le côté secondaire (22 ; 22a ; 22b ; 22c ; 22d ; 22e ; 22f) en situation de compression de cet élément de ressort d'appui (50, 52 ; 50a, 52a ; 50b, 52b ; 50c, 52c ; 50d, 52d ; 50e, 52e ; 50f, 52f).

2. Amortisseur en torsion selon la revendication 1, **caractérisé en ce que** les éléments de ressort d'appui (50, 52 ; 50a, 52a ; 50b, 52b ; 50c, 52c ; 50d, 52d ; 50e, 52e ; 50f, 52f) prennent une forme annulaire et ferment, des deux côtés de l'élément de vitre centrale (24 ; 24a ; 24b ; 24c ; 24d ; 24e ; 24f), une région (20 ; 20a ; 20b ; 20c ; 20d ; 20e ; 20f) délimitée par les éléments de vitre de recouvrement (14, 16 ; 14a, 16a ; 14b, 16b ; 14c, 16c ; 14d, 16d ; 14e, 16e ; 14f, 16f) et contenant le dispositif à élément amortisseur (30 ; 30a ; 30b ; 30c ; 30d ; 30e ; 30f).

3. Amortisseur en torsion selon la revendication 2, **caractérisé en ce que** les éléments de ressort d'appui (50, 52 ; 50a, 52a ; 50b, 52b ; 50c, 52c ; 50d, 52d ; 50e, 52e ; 50f, 52f) prennent la forme de ressorts Belleville.

4. Amortisseur en torsion selon l'une quelconque des revendications 1 à 3, **caractérisé en ce que** le dispositif de protection contre les surcharges (54 ; 54a ; 54b ; 54c ; 54d ; 54e ; 54f) prévu en association à un élément de ressort d'appui (50 ; 50a ; 50b ; 50c ; 50d ; 50e ; 50f) prend une forme annulaire et peut être disposé avec un certain jeu axial par rapport à l'élément de vitre centrale (24 ; 24a ; 24b ; 24c ; 24d ; 24e ; 24f) et/ou à un élément de vitre de recouvrement (14 ; 14a ; 14b ; 14c ; 14d ; 14e ; 14f) entrant en interaction avec l'élément de ressort d'appui (50 ; 50a ; 50b ; 50c ; 50d ; 50e ; 50f) et être maintenu dans le plan axial.

5. Amortisseur en torsion selon la revendication 4, **caractérisé en ce que** l'élément de ressort d'appui (50a ; 50f) est maintenu par rapport à l'élément de vitre centrale (24a ; 24f) ou à l'élément de vitre de recouvrement (14a ; 14f) entrant en interaction avec lui via le dispositif de protection contre les surcharges (54a ; 54f).

6. Amortisseur en torsion selon la revendication 4 ou 5, **caractérisé en ce que** le dispositif de protection contre les surcharges (54 ; 54a ; 54b ; 54c ; 54d ; 54e ; 54f) comprend une bague de protection contre les surcharges (56 ; 56a ; 56b ; 56c ; 56d ; 56e ; 56f) de préférence réalisée en matière plastique.

7. Amortisseur en torsion selon les revendications 5 et 6, **caractérisé en ce que** l'élément de ressort d'appui (50a) est maintenu contre la bague de protection contre les surcharges (56a) via une bague de compression (66a).

8. Amortisseur en torsion selon la revendication 7, **caractérisé en ce que** la bague de compression (66a) est réalisée en métal.

9. Amortisseur en torsion selon l'une quelconque des revendications 6 à 8, **caractérisé en ce que** la bague de protection contre les surcharges (56 ; 56a ; 56b ; 56c ; 56d ; 56e ; 56f) est réalisée de façon flexible au moins dans la zone d'appui par rapport à l'élément de vitre centrale (24 ; 24a ; 24b ; 24c ; 24d ; 24e ; 24f) et/ou à l'élément de vitre de recouvrement (14 ; 14a ; 14b ; 14c ; 14d ; 14e ; 14f).

10. Amortisseur en torsion selon l'une quelconque des revendications 4 à 9, **caractérisé en ce qu'**au moins une ouverture (64 ; 64a ; 64b ; 64c ; 64d ; 64e ; 64f) est prévue dans le plan radial à l'extérieur du dispositif de protection contre les surcharges (54 ; 54a ; 54b ; 54c ; 54d ; 54e ; 54f), dans l'élément de vitre de recouvrement (14 ; 14a ; 14b ; 14c ; 14d ; 14e ; 14f), pour remplir la région (20 ; 20a ; 20b ; 20c ; 20d ; 20e ; 20f) délimitée par les éléments de vitre de recouvrement (14, 16 ; 14a, 16a ; 14b, 16b ; 14c, 16c ; 14d, 16d ; 14e, 16e ; 14f, 16f) en fluide.

11. Amortisseur en torsion selon la revendication 10, **caractérisé en ce que** l'au moins une ouverture (64 ; 64a ; 64b ; 64c ; 64d ; 64e ; 64f) est disposée dans la région radiale de l'élément de ressort d'appui (50 ; 50a ; 50b ; 50c ; 50d ; 50e ; 50f).

12. Amortisseur en torsion selon la revendication 10 ou 11, **caractérisé en ce que** l'élément de ressort d'appui (50 ; 50a ; 50b ; 50c ; 50d ; 50f) est maintenu dans le plan radial à l'intérieur de l'au moins une ouverture (64 ; 64a ; 64b ; 64c ; 64d ; 64f) par rapport à l'élément de vitre de recouvrement (14 ; 14a ; 14b ; 14c ; 14d ; 14f).

13. Amortisseur en torsion selon la revendication 12, **caractérisé en ce que** le dispositif de protection contre les surcharges (54b) peut être maintenu dans le plan axial par rapport à l'élément de vitre de recouvrement (14b) via l'élément de ressort d'appui (50b).

14. Amortisseur en torsion selon l'une quelconque des revendications 1 à 13, **caractérisé en ce que** le dispositif de protection contre les surcharges (54e) est réalisé d'un seul tenant avec l'élément de ressort d'appui (50e) associé.

15. Amortisseur en torsion selon l'une quelconque des revendications 1 à 14, **caractérisé en ce que** le dispositif à élément amortisseur (30 ; 30a ; 30b ; 30c ; 30d ; 30e ; 30f) est disposé dans une région (20a ; 20b ; 20c ; 20d ; 20e ; 20f) délimitée par les éléments de vitre de recouvrement (14, 16 ; 14a, 16a ; 14b, 16b ; 14c, 16c ; 14d, 16d ; 14e, 16e ; 14f, 16f), avec un certain jeu axial correspondant au moins au jeu axial admis par l'au moins un dispositif de protection contre les surcharges (54 ; 54a ; 54b ; 54c ; 54d ; 54e ; 54f) associé à l'élément de ressort d'appui (50, 52 ; 50a, 52a ; 50b, 52b ; 50c, 52c ; 50d, 52d ; 50e, 52e ; 50f, 52f) entre le côté principal (12 ; 12a ; 12b ; 12c ; 12d ; 12e ; 12f) et le côté secondaire (22 ; 22a ; 22b ; 22c ; 22d ; 22e ; 22f).

16. Amortisseur en torsion selon l'une quelconque des revendications 1 à 15, **caractérisé en ce que** le dispositif de protection contre les surcharges (54 ; 54a ; 54b ; 54c ; 54d ; 54f) est disposé avec un certain jeu radial par rapport à l'élément de vitre centrale (24 ; 24a ; 24b ; 24c ; 24d ; 24f) et/ou à l'élément de vitre de recouvrement (14 ; 14a ; 14b ; 14c ; 14d ; 14f) entrant en interaction avec l'élément de ressort d'appui (50 ; 50a ; 50b ; 50c ; 50d ; 50f) et peut être maintenu dans le plan radial.

17. Amortisseur en torsion selon la revendication 16, **caractérisé en ce qu'**un élément de l'élément de vitre centrale (24 ; 24a ; 24b ; 24c ; 24d ; 24f) et de l'élément de vitre de recouvrement (14 ; 14a ; 14b ; 14c ; 14d ; 14f) comporte une région de centrage (58 ; 58a ; 58b ; 58c ; 58d ; 58f) centrant, dans le plan radial, le dispositif de protection contre les surcharges (54 ; 54a ; 54b ; 54c ; 54d ; 54f) et que l'autre élément de l'élément de vitre centrale (24 ; 24a ; 24b ; 24c ; 24d ; 24f) et de l'élément de vitre de recouvrement (14 ; 14a ; 14b ; 14c ; 14d ; 14f) comporte une zone de contre-centrage (62 ; 60a ; 62b ; 62c ; 62d ; 62f) pouvant être placée contre le dispositif de protection contre les surcharges (54 ; 54a ; 54b ; 54c ; 54d ; 54f) en présence d'un mouvement relatif s'opérant entre le côté principal (12 ; 12a ; 12b ; 12c ; 12d ; 12f) et le côté secondaire (22 ; 22a ; 22b ; 22c ; 22d ; 22f) dans l'installation de centrage.

18. Amortisseur en torsion selon l'une quelconque des revendications 1 à 17, **caractérisé en ce que** le dispositif de protection contre les surcharges (54f) est maintenu fixement sans rotation par rapport à un élément de l'élément de vitre centrale (24f) et de l'élément de vitre de recouvrement (14f).

19. Amortisseur en torsion selon l'une quelconque des revendications 1 à 18, **caractérisé en ce qu'**une formation d'endentement (36) est prévue au niveau d'un côté du côté principal (12) et du côté secondaire (22) pour réaliser le couplage avec une formation de contre-endentement (38) prévue au niveau d'un composant suivant le rythme du couple de rotation suivant.

20. Amortisseur en torsion selon la revendication 19, **caractérisé en ce qu'**un agencement de précontrainte de périphérie (42) est associé à la formation d'endentement (36), ledit agencement maintenant la formation d'endentement (36) dans la direction périphérique en exerçant une précontrainte contre la formation de contre-endentement (38).
